# EUROPÄISCHE PATENTSCHRIFT

(11) **EP 3 573 844 B1**
(45) Veröffentlichungstag und Bekanntmachung des Hinweises auf die Patenterteilung: **21.04.2021**
(21) Anmeldenummer: 18723738.3
(22) Anmeldetag: 25.04.2018
(51) Int. Cl.: B60B 17/00

(54) **RAD FÜR SCHIENENFAHRZEUGE**
WHEEL FOR RAIL VEHICLES
ROUE POUR VÉHICULES FERROVIAIRES

(30) Priorität: 27.04.2017 AT 503442017
(43) Veröffentlichungstag der Anmeldung: 04.12.2019
(73) Patentinhaber: Siemens Mobility Austria GmbH, 1210 Wien (AT)
(72) Erfinder: BORONKAI, Laszlo, 8101 Gratkorn (AT); JANSKY, Harald, 8020 Graz (AT); ROTH, Zsolt, 89518 Heidenheim (DE)
(74) Vertreter: Deffner, Rolf
(86) Internationale Anmeldenummer: PCT/EP2018/060635
(87) Internationale Veröffentlichungsnummer: WO 2018/197581

(56) Entgegenhaltungen:
- CN-U- 201 693 980
- CN-Y- 201 257 872
- DE-A1- 1 605 077
- US-A- 174 051
- US-A- 1 039 668

## Beschreibung

Die Erfindung betrifft ein Rad für Schienenfahrzeuge, das eine erste Radnabe und einen ersten Radkörper mit einem Radsteg, einem Spurkranz und einer Lauffläche aufweist.

Räder von Fahrzeugen müssen zum Zweck der Wartung und Instandhaltung einfach und schnell getauscht werden können. Aus dem Stand der Technik sind Fahrwerke für Schienenfahrzeuge mit Außen- oder Innenlagerung bekannt.

Diese weisen Räder auf, die häufig über Presssitze mit Radsatzwellen zu Radsätzen verbunden sind. Radstege und Radnaben dieser Räder sind oft als untrennbare Einheiten ausgebildet.

Müssen diese Räder beispielsweise getauscht werden, so sind jene Radsätze mit den zu tauschenden Rädern auszubauen, um anschließend die Räder mittels einer Radsatzpresse abpressen und neue Räder aufpressen zu können. Nach dem Tausch der Räder werden die Radsätze wieder in das Fahrwerk eingebaut.

Insbesondere bei innengelagerten Fahrwerken kann ein Ein- und Ausbau von Radsätzen sehr aufwendig sein. Dadurch vergrößern sich Lebensdauerkosten der Fahrwerke bzw. der Schienenfahrzeuge.

Beispielsweise zeigt die AT 514373 A1 eine Radsatzlagerung für innengelagerte Fahrwerke von Schienenfahrzeugen.

Aus dem Stand der Technik ist weiterhin die DE 10 2011 117 444 B4 bekannt.

Darin wird ein Schienenfahrzeugrad offenbart, das eine Radnabe, einen Radteller und einen Radkranz aufweist. Der Radteller ist über eine Verzahnung mit dem Radkranz verbunden. Die Verzahnung ist wellenförmig ausgebildet und auf Mantelflächen des Radtellers und des Radkranzes angeordnet. Der Radteller greift formschlüssig in den Radkranz ein. Eine Befestigung des Radtellers auf dem Radkranz ist mittels eines Sprengrings, eines Sicherungsrings und Schrauben ausgeführt.

Auf einem Gewinde der Radnabe ist eine Mutter angeordnet, welche die Radnabe und den Radteller miteinander axial verspannt. Über eine konische Passung zwischen der Radnabe und dem Radteller sind diese beiden Komponenten auch radial miteinander verspannt.

Die Radnabe kann mittels eines Pressvorgangs kraftschlüssig mit einer Achswelle verbunden werden.

Die CN 201 257 872 Y offenbart Räder mit umfangsseitigen Verzahnungen zur Verbindung einzelner Räderkomponenten.

In der CN 201 693 980 U ist ein Rad dargestellt, bei welchem eine Radnabe über eine umfangsseitig angeordnete Verzahnung mit einem Radkörper, welcher einen Radsteg und einen Radkranz aufweist, verbunden ist.

Darüber hinaus beschreibt die US 174 051 A ein elastisches Rad für Schienenfahrzeuge, bei dem eine Radnabe mit einem Radkörper mittels einer umfangsseitigen Verzahnung verbunden ist. Die Radnabe weist eine Außenverzahnung, der Radkörper eine Innenverzahnung auf.

Der Erfindung liegt die Aufgabe zugrunde, ein gegenüber dem Stand der Technik weiterentwickeltes Rad anzugeben.

Erfindungsgemäß wird diese Aufgabe gelöst mit einem Rad der eingangs genannten Art, bei dem in zumindest einem Kontaktbereich zwischen der ersten Radnabe und dem Radsteg zumindest eine Verzahnung vorgesehen ist.

Dadurch wird der Vorteil erzielt, dass der erste Radkörper einfach montiert und demontiert werden kann. Zur Demontage wird er ohne großen Kraftaufwand von der ersten Radnabe abgezogen. Ein Abpressen des ganzen Rads von einer Radsatzwelle ist nicht erforderlich. Die erste Radnabe kann während eines Tausches des ersten Radkörpers auf der Radsatzwelle verbleiben.

Weiterhin ist es nicht erforderlich, einen Radsatz zum Zweck eines Rädertausches aus einem Fahrwerk auszubauen.

Der insbesondere bei innengelagerten Fahrwerken große Zeitaufwand für einen Ein- und Ausbau von Radsätzen kann bei Einsatz des erfindungsgemäßen Rads aufgrund der Verzahnung zwischen der ersten Radnabe und dem Radsteg eingespart werden.

Aufgrund einer dadurch vereinfachten und beschleunigten Wartung- und Instandhaltung sinken die Lebensdauerkosten für Fahrwerke bzw. Schienenfahrzeuge mit erfindungsgemäßen Rädern.

Die Verzahnung ist zwischen der ersten Radnabe und dem Radsteg angeordnet und weist somit einen kleinen Radius um die Radsatzwelle auf. Dadurch weist der erste Radkörper genügend freien Bauraum auf, um auf dem Radsteg beispielsweise eine Radbremsscheibe anzuordnen.

Es ist erfindungsgemäß vorgesehen,dass auf einer ersten Stirnfläche der ersten Radnabe ein erster Zahnkranz und auf einer zweiten Stirnfläche des Radstegs ein zweiter Zahnkranz angeordnet sind.

Dadurch ergibt sich eine besonders einfache Montier- und Demontierbarkeit des ersten Radkörpers. Dieser muss nur auf die erste Radnabe aufgesetzt werden und kann so, bereits auf der ersten Radnabe gelagert und somit gegen ein Herabfallen gesichert, über den zweiten Zahnkranz des Radstegs mit dem auf der ersten Stirnfläche der ersten Radnabe angeordneten ersten Zahnkranz in Eingriff gebracht werden.

Eine vorteilhafte Ausgestaltung erhält man, wenn die zumindest eine Verzahnung als Flachverzahnung ausgeführt ist.

Durch diese Maßnahme ergibt sich eine besonders gute Ausnutzung eines vorhandenen Bauraumbudgets. Weiterhin werden besonders kleine Zwischenräume zwischen einzelnen Zähnen der Verzahnung erzielt. Dadurch ist die Verzahnung gut gegen Umgebungseinflüsse und folglich gegen Korrosion geschützt. Weiterhin wird eine annähernd spielfreie Kraft- und Drehmomentenübertragung zwischen der ersten Radnabe und dem ersten Radkörper erzielt.

Eine günstige Lösung wird erzielt, wenn auf einem Gewinde der ersten Radnabe ein gesichertes, zentrales Spannelement, das den Radsteg kontaktiert, angeordnet ist.

Durch diese Maßnahme werden die erste Radnabe und der erste Radkörper miteinander verspannt, wobei eine Montage und Demontage des Spannelements einfach und rasch erfolgt. Weiterhin werden unbeabsichtigte Lockerungs- oder Lösevorgänge des Spannelements vermieden.

Es ist günstig, wenn mit dem Radsteg eine Radbremsscheibe verbunden ist.

Durch diese Maßnahme werden Wartungs- und

Instandhaltungsvorgänge vereinfacht und beschleunigt. Beispielsweise kann der erste Radkörper zusammen mit der Radbremsscheibe demontiert werden und durch einen anderen (z.B. neuen) ersten Radkörper, auf dem eine andere (z.B. neue) Radbremsscheibe befestigt ist, ersetzt werden. Auf eine Demontage der Radbremsscheibe von dem Radsteg kann verzichtet werden.

Nachfolgend wird die Erfindung anhand von Ausführungsbeispielen näher erläutert.

Es zeigen beispielhaft:
- Fig. 1:: Eine erste Ansicht einer Schnittdarstellung einer beispielhaften Ausführung eines erfindungsgemäßen Rads mit einer ersten Radnabe, einem ersten Radkörper und einer darauf angeordneten Radbremsscheibe,
- Fig. 2:: Eine zweite Ansicht der beispielhaften Ausführung eines erfindungsgemäßen Rads gemäß Fig. 1, und
- Fig. 3:: Eine Draufsicht auf ein innengelagertes Fahrwerk mit erfindungsgemäßen Rädern.

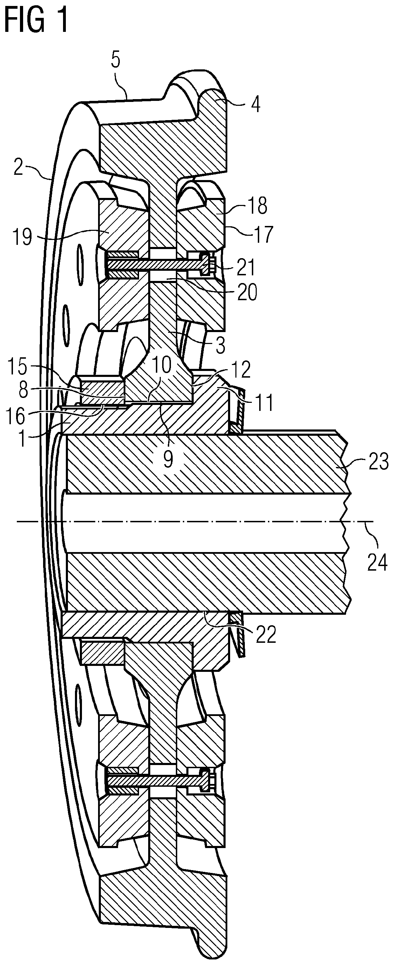

Eine in Fig. 1 gezeigte erste Ansicht einer Schnittdarstellung offenbart eine Variante eines erfindungsgemäßen Rads für ein Fahrwerk eines Schienenfahrzeugs.

Das Rad umfasst eine als kurzes Rohr mit einem Flansch 11 ausgebildete erste Radnabe 1 sowie einen ersten Radkörper 2, der einen Radsteg 3 sowie einen Radkranz, umfassend einen Spurkranz 4 und eine Lauffläche 5, aufweist. Der Radsteg 3 und der Spurkranz 4 sind als eine bauliche Einheit ausgebildet. Es ist kein getrennt von dem Radsteg 3 ausgeführter und beispielsweise form- oder kraftschlüssig mit diesem verbundener Radreifen vorgesehen.

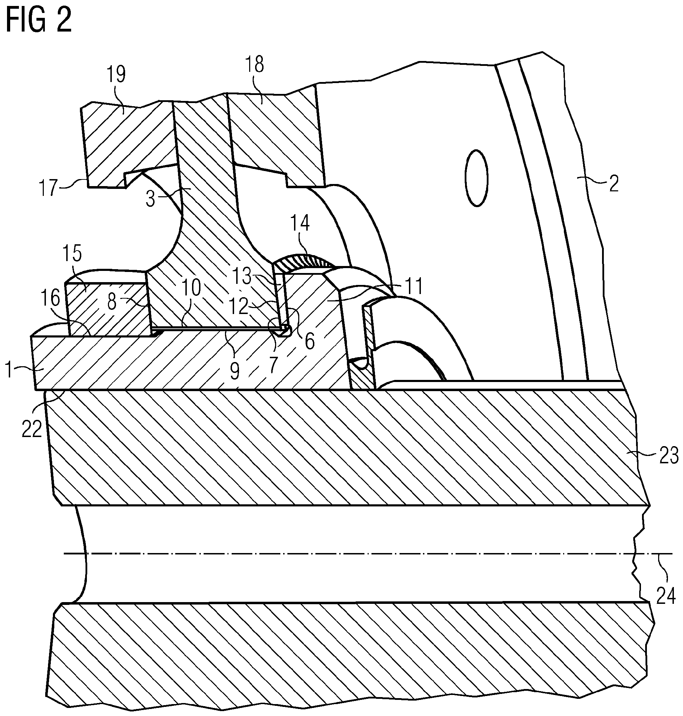

Auf einer Außenmantelfläche 9 der ersten Radnabe 1 ist der Radsteg 3 angeordnet und kontaktiert die erste Radnabe 1 über eine Innenmantelfläche 10. Weiterhin kontaktiert der Radsteg 3 den Flansch 11 der ersten Radnabe 1. Im Bereich des Flansches 11 weisen die erste Radnabe 1 und der Radsteg 3 einen Kontaktbereich auf. In diesem Kontaktbereich ist eine Verzahnung 12 vorgesehen, die in Fig. 2 näher dargestellt ist.

Auf der Außenmantelfläche 9 der ersten Radnabe 1 ist ein Gewinde 16 ausgebildet, auf das ein gesichertes Spannelement 15 geschraubt ist. Das Spannelement 15 kontaktiert den Radsteg 3 im Bereich einer dritten Stirnfläche 8, verspannt den ersten Radkörper 2 und die erste Radnabe 1 miteinander und sichert den ersten Radkörper 2 auf der ersten Radnabe 1 gegen Verrutschen in Richtung einer Radsatz-Längsachse 24. Das Spannelement 15 ist als Zentralmutter mit nicht dargestellten, aus dem Stand der Technik bekannten Keilsicherungsscheiben ausgebildet. Die Keilsicherungsscheiben sind zwischen dem Spannelement 15 und dem Radsteg 3 angeordnet und erzeugen aufgrund einer Keilwirkung eine Klemmkraft zwischen dem Spannelement 15 und dem Radsteg 3.

Dabei handelt es sich um eine günstige Lösung einer Schraubensicherung. Erfindungsgemäß ist es jedoch auch vorstellbar, dass das Spannelement 15 aus dem Stand der Technik bekannte Vielfachschrauben aufweist. Bei einer Ausführung des Spannelements 15 mit Vielfachschrauben sind mehrere Druckschrauben auf einer kreisringförmigen Grundfläche des Spannelements 15 angeordnet, deren Achsen parallel zu der Radsatz-Längsachse 24 verlaufen. Zwischen dem Spannelement 15 und dem Radsteg 3 ist eine Druckscheibe angeordnet, gegen welche die Druckschrauben gespannt sind und zur Sicherung des Spannelements 15 auf der ersten Radnabe 1 Druckkräfte aufbringen.

Erfindungsgemäß sind auch andere, ebenfalls aus dem Stand der Technik bekannte Schraubensicherungen denkbar. Beispielsweise können Klebstoffe als stoffschlüssige, Kontermuttern, Klemmmuttern oder Klemmschrauben als kraftschlüssige oder Splinte, Drähte, Bleche oder Sperrringe als formschlüssige Schraubensicherungen eingesetzt sein.

Auf dem Radsteg 3 ist eine aus dem Stand der Technik bekannte Radbremsscheibe 17 mit einem ersten Reibring 18 und einem zweiten Reibring 19 angeordnet. In einer ersten Bohrung 20, die durch den Radsteg 3, den ersten Reibring 18 und den zweiten Reibring 19 verläuft, ist eine erste Schraube 21 angeordnet. Es sind weitere Bohrungen vorgesehen, die ebenfalls durch den Radsteg 3, den ersten Reibring 18 und den zweiten Reibring 19 verlaufen und in denen weitere Schrauben angeordnet sind. Die erste Bohrung 20 und die weiteren Bohrungen sind auf einem Lochkreis mit definiertem Durchmesser vorgesehen.

Die Radbremsscheibe 17 ist aufgrund der ersten Schraube 21 und der weiteren Schrauben mit dem Radsteg 3 verspannt und dadurch auf dem ersten Radkörper 2 gesichert.

Erfindungsgemäß ist es auch vorstellbar, dass keine Bremsscheibe auf dem erfindungsgemäßen Rad angeordnet ist oder dass auf die Lauffläche 5 des Rads eine Klotzbremse wirkt etc.

Die erste Radnabe 1 ist auf einer als Hohlwelle ausgeführten Radsatzwelle 23 des Fahrwerks angeordnet und kontaktiert deren äußere Mantelfläche mit einer inneren Mantelfläche. Erfindungsgemäß ist es auch vorstellbar, die Radsatzwelle 23 als Vollwelle auszubilden.

Zwischen der ersten Radnabe 1 und der Radsatzwelle 23 ist ein zylindrischer Presssitz 22 vorgesehen, aufgrund dessen die erste Radnabe 1 gegen Verdrehungen und Verrutschen bezüglich der Radsatzwelle 23 gesichert ist.

Dabei handelt es sich um eine günstige Lösung. Erfindungsgemäß ist es jedoch auch vorstellbar, zwischen der ersten Radnabe 1 und der Radsatzwelle 23 einen konischen Pressverband vorzusehen.

Die erste Radnabe 1, der erste Radkörper 2, das Spannelement 15, die Radbremsscheibe 17 sowie die Radsatzwelle 23 sind konzentrisch bezüglich der Radsatz-Längsachse 24 angeordnet.

Fig. 2 zeigt eine zweite Ansicht der in Fig. 1 offenbarten Schnittdarstellung einer Variante eines erfindungsgemäßen Rads für ein Fahrwerk eines Schienenfahrzeugs. Es werden in Fig. 2 teilweise die gleichen Bezugszeichen wie in Fig. 1 verwendet.

Auf einer ersten Radnabe 1 ist ein erster Radkörper 2 angeordnet, wobei eine Außenmantelfläche 9 der ersten Radnabe 1 eine Innenmantelfläche 10 des ersten Radkörpers 2 kontaktiert. Der erste Radkörper 2 ist mittels eines auf einem Gewinde 16 der ersten Radnabe 1 vorgesehenen und diesen über eine dritte Stirnfläche 8 kontaktierenden Spannelements 15 gegen einen Flansch 11 der ersten Radnabe 1 gedrückt und dadurch auf der ersten Radnabe 1 in Richtung einer Radsatz-Längsachse 24 gesichert. Auf einem Radsteg 3 des ersten Radkörpers 2 ist eine Radbremsscheibe 17, die einen ersten Reibring 18 und einen zweiten Reibring 19 umfasst, angeordnet.

Die erste Radnabe 1 ist über einen zylindrischen Presssitz 22 auf einer Radsatzwelle 23 angeordnet und gesichert.

Im Bereich einer ersten Stirnfläche 6 der ersten Radnabe 1 und einer zweiten Stirnfläche 7 des Radstegs 3 weisen die erste Radnabe 1 und der erste Radkörper 2 einen Kontaktbereich auf, in dem eine Verzahnung 12 vorgesehen ist. Auf der ersten Stirnfläche 6 der ersten Radnabe 1 ist ein erster Zahnkranz 13 und auf der zweiten Stirnfläche 7 des Radstegs 3 ein zweiter Zahnkranz 14 angeordnet. Der erste Zahnkranz 13 ist mit dem zweiten Zahnkranz 14 in Eingriff bzw. der erste Zahnkranz 13 und der zweite Zahnkranz 14 kontaktieren einander. Der erste Radkörper 2 ist dadurch gegen unbeabsichtigte Verdrehungen bezüglich der ersten Radnabe 1 gesichert und es werden Kräfte und Drehmomente zwischen der ersten Radnabe 1 und dem ersten Radkörper 2 übertragen.

Die Verzahnung 12 ist als Flachverzahnung, die aus dem Stand der Technik als Stirnzahnverbindung oder als Plankerbverzahnung bekannt ist, bzw. ähnlich einer stirnseitigen Keilwelle ausgeführt. Dadurch wird eine besonders gute Ausnutzung eines vorhandenen Bauraumbudgets erzielt sowie besonders kleine Zwischenräume zwischen einzelnen Zähnen, welche V-förmig ausgeführt sind, des ersten Zahnkranzes 13 und des zweiten Zahnkranzes 14 erzielt. Dadurch ist die Verzahnung 12 gut gegen Umgebungseinflüsse und folglich gegen Korrosion geschützt. Kräfte und Drehmomente werden annähernd spielfrei zwischen der ersten Radnabe 1 und dem ersten Radkörper 2 übertragen.

Die Verzahnung 12 ist stirnseitig angeordnet, wobei es sich um eine günstige Lösung handelt.

Außerhalb der beanspruchten Erfindung ist es jedoch auch vorstellbar, die Verzahnung 12 umfangsseitig anzuordnen, wobei der erste Zahnkranz 13 auf der Außenmantelfläche 9 der ersten Radnabe 1 und der zweite Zahnkranz 14 auf der Innenmantelfläche 10 des Radstegs 3 vorgesehen sind.

Die Verzahnung 12 ist auf Grundlage einer aus dem Stand der Technik bekannten Finite-Elemente-Methode (FEM) und mittels entsprechender Berechnungen dimensioniert. Erfindungsgemäß sind jedoch auch andere, ebenfalls aus dem Stand der Technik bekannte Auslegungsverfahren denkbar.

Die Verzahnung 12 wird auf einem aus dem Stand der Technik bekannten 5-Achsen-Bearbeitungszentrum mittels Fräsbearbeitung gefertigt. Erfindungsgemäß sind jedoch auch andere, ebenfalls aus dem Stand der Technik bekannte Fertigungsmittel und Fertigungsverfahren vorstellbar.

Für eine Montage des ersten Radkörpers 2 auf der ersten Radnabe 1 wird der erste Radkörper 2 auf die erste Radnabe 1 gesetzt, so dass die Außenmantelfläche 9 der ersten Radnabe 1 die Innenmantelfläche 10 des ersten Radkörpers 2 kontaktiert. Dadurch ist der erste Radkörper 2 gegen Herabfallen von der ersten Radnabe 1 gesichert. Anschließend wird der zweite Zahnkranz 14 des ersten Radkörpers 2 mit dem ersten Zahnkranz 13 der ersten Radnabe 1 in Eingriff gebracht, um den ersten Radkörper 2 gegen unbeabsichtigte Verdrehungen bezüglich der ersten Radnabe 1 zu sichern. Daraufhin wird das Spannelement 15 auf das Gewinde 16 der ersten Radnabe 1 geschraubt und gegen den Radsteg 3 gedrückt, d.h. das Spannelement 15 wird angezogen, wodurch der erste Radkörper 2 und die erste Radnabe 1 miteinander verspannt werden.

Zur Demontage wird das Spannelement 15 gelöst und von der ersten Radnabe 1 gezogen. Anschließend wird der erste Radkörper 2 von der ersten Radnabe 1 gezogen.

Montage und Demontage können einfach und mit geringem Zeitaufwand durchgeführt werden. Beispielsweise ist es möglich, zum Tausch der Radbremsscheibe 17 den ersten Radkörper 2 zusammen mit der Radbremsscheibe 17 von der ersten Radnabe 1 abzuziehen und durch einen anderen ersten Radkörper 2 mit vormontierter Radbremsscheibe 17 zu ersetzen. Erfindungsgemäß ist es jedoch auch möglich, die Radbremsscheibe 17 von dem ersten Radkörper 2 zu demontieren bzw. darauf zu montieren.

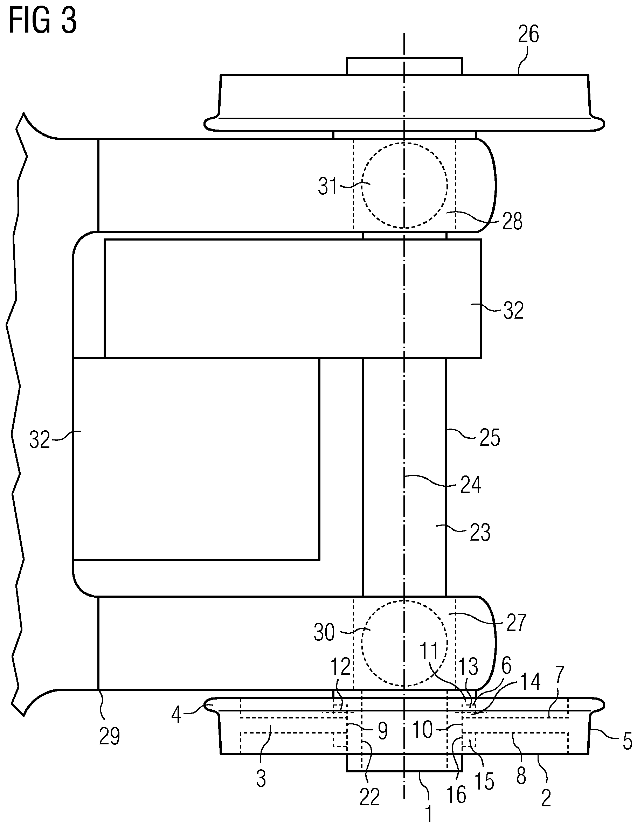

In Fig. 3 ist eine Draufsicht auf ein beispielhaftes innengelagertes Fahrwerk für ein Schienenfahrzeug mit beispielhaften erfindungsgemäßen Rädern dargestellt.

Das Fahrwerk weist einen ersten Radsatz 25 mit einer Radsatzwelle 23, einem ersten Radkörper 2 und einem zweiten Radkörper 26 auf sowie einen konstruktiv gleich dem ersten Radsatz 25 ausgebildeten, nicht dargestellten zweiten Radsatz auf, die mit einem Fahrwerksrahmen 29 verbunden sind.

Das Fahrwerk weist eine Innenlagerung auf, d.h. der erste Radsatz 25 ist in einem Bereich zwischen dem ersten Radkörper 2 und dem zweiten Radkörper 26 über ein erstes Radsatzlager 27 und ein zweites Radsatzlager 28 an den Fahrwerksrahmen 29 gekoppelt bzw. drehbar gelagert.

Der zweite Radsatz ist, dem gleichen Prinzip folgend, über ein drittes Radsatzlager und ein viertes Radsatzlager, die nicht dargestellt sind, an den Fahrwerksrahmen 29 angebunden bzw. drehbar gelagert.

Weiterhin sind zwischen dem Fahrwerksrahmen 29 und dem ersten Radsatz 25 sowie dem Fahrwerksrahmen 29 und dem zweiten Radsatz eine erste Primärfeder 30, eine zweite Primärfeder 31 sowie, nicht dargestellt, eine dritte Primärfeder und eine vierte Primärfeder angeordnet.

Eine erste Antriebsmotor-Getriebeeinheit 32 ist in dem Fahrwerksrahmen 29 gelagert und zur Übertragung von Antriebs- und Bremsmomenten an den ersten Radsatz 25 gekoppelt.

Eine nicht dargestellte zweite Antriebsmotor-Getriebeeinheit ist ebenfalls in dem Fahrwerksrahmen 29 gelagert und an den zweiten Radsatz gekoppelt.

Mit der Radsatzwelle 23 ist eine erste Radnabe 1 über einen zylindrischen Presssitz 22 verbunden. Auf der ersten Radnabe 1 ist ein erster Radkörper 2 angeordnet, der einen Radsteg 3, einen Spurkranz 4 und eine Lauffläche 5 aufweist.

Eine Außenmantelfläche 9 der ersten Radnabe 1 kontaktiert eine Innenmantelfläche 10 des ersten Radkörpers 2.

Der erste Radkörper 2 ist über eine Verzahnung 12, die insbesondere auch in Fig. 2 dargestellt ist, gegen Verdrehungen bezüglich der ersten Radnabe 1 gesichert. Die Verzahnung 12 weist einen auf einer ersten Stirnfläche 6 eines Flansches 11 der ersten Radnabe 1 angeordneten ersten Zahnkranz 13 und einen auf einer zweiten Stirnfläche 7 des Radstegs 3 angeordneten zweiten Zahnkranz 14 auf. Der erste Zahnkranz 13 ist mit dem zweiten Zahnkranz 14 in Eingriff. Über ein auf ein Gewinde 16 der ersten Radnabe 1 geschraubtes und über eine dritte Stirnfläche 8 des Radstegs 3 den ersten Radkörper 2 kontaktierendes Spannelement 15, das auch in Fig. 1 und Fig. 2 gezeigt ist, sind der erste Radkörper 2 und die erste Radnabe 1 miteinander verspannt und der erste Radkörper 2 ist gegen Verrutschen in Richtung einer Radsatz-Längsachse 24 auf der ersten Radnabe 1 gesichert.

Zur Demontage des ersten Radkörpers 2 wird das Spannelement 15 gelöst und von der ersten Radnabe 1 abgezogen. Anschließend wird der erste Radkörper 2 abgezogen. Demontage und Montage des ersten Radkörpers 2 können einfach und rasch von Außenseiten des Fahrwerks durchgeführt werden. Ein Ausbau des ersten Radsatzes 25 aus dem Fahrwerk bzw. eine Trennung des ersten Radsatzes 25 von dem Fahrwerksrahmen 29 ist dazu nicht erforderlich.

Der zweite Radkörper 26 des ersten Radsatzes 25 ist im Hinblick auf konstruktive und verbindungstechnische Prinzipien gleich wie der erste Radkörper 2 ausgeführt.

Erfindungsgemäß ist es beispielsweise auch vorstellbar, dass das Fahrwerk eine Außenlagerung (d.h. die Radsatzwelle 23 ist außerhalb eines Bereichs zwischen den Rädern über Lager mit dem Fahrwerksrahmen 29 verbunden) aufweist, als antriebsloses Lauffahrwerk oder als Losradfahrwerk, wie es beispielsweise für Niederflurfahrzeuge bekannt ist, ausgebildet ist. Weiterhin ist es auch denkbar, dass das Fahrwerk nur einen oder mehr als zwei Radsätze aufweist.

### Liste der Bezeichnungen

- 1: Erste Radnabe
- 2: Erster Radkörper
- 3: Radsteg
- 4: Spurkranz
- 5: Lauffläche
- 6: Erste Stirnfläche
- 7: Zweite Stirnfläche
- 8: Dritte Stirnfläche
- 9: Außenmantelfläche
- 10: Innenmantelfläche
- 11: Flansch
- 12: Verzahnung
- 13: Erster Zahnkranz
- 14: Zweiter Zahnkranz
- 15: Spannelement
- 16: Gewinde
- 17: Radbremsscheibe
- 18: Erster Reibring
- 19: Zweiter Reibring
- 20: Erste Bohrung
- 21: Erste Schraube
- 22: Presssitz
- 23: Radsatzwelle
- 24: Radsatz-Längsachse
- 25: Erster Radsatz
- 26: Zweiter Radkörper
- 27: Erstes Radsatzlager
- 28: Zweites Radsatzlager
- 29: Fahrwerksrahmen
- 30: Erste Primärfeder
- 31: Zweite Primärfeder
- 32: Erste Antriebsmotor-Getriebeeinheit

## Patentansprüche

1. Rad für Schienenfahrzeuge, das eine erste Radnabe und einen ersten Radkörper mit einem Radsteg, einem Spurkranz und einer Lauffläche aufweist,
wobei in zumindest einem Kontaktbereich zwischen der ersten Radnabe (1) und dem Radsteg (3) zumindest eine Verzahnung (12) vorgesehen ist,
**dadurch gekennzeichnet, dass** auf einer ersten Stirnfläche (6) der ersten Radnabe (1) ein erster Zahnkranz (13) und auf einer zweiten Stirnfläche (7) des Radstegs (3) ein zweiter Zahnkranz (14) angeordnet sind.

2. Rad nach Anspruch 1, **dadurch gekennzeichnet, dass** die zumindest eine Verzahnung (12) als Flachverzahnung ausgeführt ist.

3. Rad nach Anspruch 1 oder 2, **dadurch gekennzeichnet, dass** auf einem Gewinde (16) der ersten Radnabe (1) ein gesichertes, zentrales Spannelement (15), das den Radsteg (3) kontaktiert, angeordnet ist.

4. Rad nach einem der Ansprüche 1, 2 oder 3, **dadurch gekennzeichnet, dass** die erste Radnabe (1) über einen Presssitz (22) mit einer Radsatzwelle (23) verbunden ist.

5. Rad nach einem der Ansprüche 1 bis 4, **dadurch gekennzeichnet, dass** mit dem Radsteg (3) eine Radbremsscheibe (17) verbunden ist.

6. Innengelagertes Fahrwerk für Schienenfahrzeuge mit zumindest einem Rad nach einem der Ansprüche 1 bis 5.

7. Außengelagertes Fahrwerk für Schienenfahrzeuge mit zumindest einem Rad nach einem der Ansprüche 1 bis 5.

8. Schienenfahrzeug mit zumindest einem Fahrwerk nach Anspruch 6 oder 7.

## Claims

1. Wheel for rail vehicles, which wheel has a first wheel hub and a first wheel body with a wheel web, a wheel flange and a running surface, wherein, in at least one contact region between the first wheel hub (1) and the wheel web (3), there is provided at least one toothing (12), **characterized in that** a first toothed ring (13) is arranged on a first face surface (6) of the first wheel hub (1) and a second toothed ring (14) is arranged on a second face surface (7) of the wheel web (3).

2. Wheel according to Claim 1, **characterized in that** the at least one toothing (12) is designed as a shallow toothing.

3. Wheel according to Claim 1 or 2, **characterized in that**, on a thread (16) of the first wheel hub (1), there is arranged a secured, central clamping element (15) which makes contact with the wheel web (3).

4. Wheel according to any of Claims 1, 2 or 3, **characterized in that** the first wheel hub (1) is connected by means of an interference fit (22) to a wheelset shaft (23).

5. Wheel according to any of Claims 1 to 4, **characterized in that** a wheel brake disk (17) is connected to the wheel web (3) .

6. Inboard-mounted chassis for rail vehicles having at least one wheel according to any of Claims 1 to 5.

7. Outboard-mounted chassis for rail vehicles having at least one wheel according to any of Claims 1 to 5.

8. Rail vehicle having at least one chassis according to Claim 6 or 7.

## Revendications

1. Roue pour véhicules ferroviaires, comportant un premier moyeu et un premier corps de roue comportant une âme de roue, un boudin et une bande de roulement, au moins une denture (12) étant prévue dans au moins une zone de contact entre le premier moyeu (1) et l'âme de roue (3), **caractérisée en ce que**, sur une première face frontale (6) du premier moyeu (1), une première jante dentée (13) est prévue, et sur une deuxième face frontale (7) de l'âme de roue (3), une deuxième jante dentée (14) est prévue.

2. Roue selon la revendication 1, **caractérisée en ce que** l'au moins une denture (12) est conçue sous forme de denture plate.

3. Roue selon la revendication 1 ou 2, **caractérisée en ce que** sur un filet (16) du premier moyeu (1), un élément de serrage central sécurisé (15) est prévu, qui est en contact avec l'âme de roue (3).

4. Roue selon l'une des revendications 1, 2 ou 3, **caractérisée en ce que**, via un ajustement serré (22), le premier moyeu (1) est relié à un arbre de jeu de roues (23).

5. Roue selon l'une quelconque des revendications 1 à 4, **caractérisée en ce qu'**un disque de frein (17) est relié à l'âme de roue (3).

6. Train de roues monté intérieurement pour véhicules ferroviaires comportant au moins une roue selon l'une des revendications 1 à 5.

7. Train de roues monté extérieurement pour véhicules ferroviaires comportant au moins une roue selon l'une des revendications 1 à 5.

8. Véhicule ferroviaire comportant au moins un train de roues selon la revendication 6 ou 7.
